# FASCICULE DE BREVET EUROPEEN

(11) **EP 0 454 546 B1**
(45) Date de publication et mention de la délivrance du brevet: **18.11.1993**
(21) Numéro de dépôt: 91401018.6
(22) Date de dépôt: 17.04.1991
(51) Int. Cl.: B64G 1/64

(54) **Dispositif d'assujetissement temporaire d'un objet à un support, à zone de rupture calibrée en traction**
Vorrichtung zur zeitlichen Halterung eines Objektes an einem Träger mit einer auf Zugkräfte kalibrierten Sollbruchstelle
Device for temporal holding of an object to a support, with a traction calibrated breaking neck

(30) Priorité: 27.04.1990 FR 9005449
(43) Date de publication de la demande: 30.10.1991
(73) Titulaire: AEROSPATIALE Société Nationale Industrielle, 75781 Paris Cédex 16 (FR)
(72) Inventeur: Spariat, Jacques, F-33160 Saint Medard en Jalles (FR); Aubret Jean-Pierre, 170, rue Pasteur, F-33200 Bordeaux (FR)
(74) Mandataire: Rinuy, Santarelli

(56) Documents cités:
- EP-A- 0 131 073
- FR-A- 2 616 856
- US-A- 4 554 905

## Description

L'invention concerne l'assujettissement temporaire d'un objet à un support, notamment, mais non exclusivement, au sein de systèmes d'assujettissement temporaire et de séparation d'un objet vis à vis de son support.

Elle se place avantageusement, mais de façon non exclusive, dans le domaine des engins spatiaux, tels que satellites, où intervient, après une phase de maintien temporaire, une phase de séparation avec éventuelle éjection avec plus ou moins de force. Elle peut aussi s'appliquer également à divers engins terrestres, maritimes (navires de surface ou sous-marins) et aériens (aéronefs en tous genres) dans lesquels on établit une liaison temporaire que l'on souhaite ensuite supprimer à un quelconque moment donné, avec éventuelle mise en mouvement prompte et précise de l'objet considéré (par exemple pour son lancement sans guidage extérieur).

C'est ainsi que l'invention peut notamment s'appliquer à la réalisation d'expériences scientifiques dans la haute atmosphère terrestre ou à l'exploration des planètes du système solaire à partir d'une sonde automatique. Elle peut par exemple servir à maintenir puis larguer ou éjecter un réservoir contenant une substance chimique destinée à servir de traceur pour étudier les vents ou champs magnétiques : il est ainsi possible d'éjecter un tel réservoir à partir d'une plate-forme artificielle, telle qu'une fusée-sonde ou une sonde planétaire.

On connaît déjà divers mécanismes assurant un tel assujettissement temporaire suivi d'une séparation et d'une éjection plus ou moins forte, pour en pratique assurer au moins une bonne séparation relative entre l'objet et son support.

On peut ainsi citer notamment les documents US-4.554.905, WO-82/02527, US-3.887.150, US-2.888.294, US-3.196.745, US-3.597.919, US-4.002.120, US-4.187.759, FR-2.616.856 ou FR-2.616.857.

En pratique, l'assujettissement temporaire de l'objet à son support est conçu pour être le plus rigide possible, en traction et en flexion.

On connaît ainsi des liaisons temporaires à séparation pyrotechnique : boulons explosifs, découpeurs à charge ou systèmes pyrotechniques de déverrouillage par effacement d'une butée. Ces diverses solutions, outre qu'elles nécessitent parfois de nombreuses pièces, supposent toujours des ordres de déverrouillage distincts des ordres d'éjection. En outre, ces opérations de séparation peuvent induire des perturbations sur l'éjection proprement dite et nuire à sa précision.

On connaît par ailleurs des liaisons à casser (frangibles) dont la rupture est commandée par l'éjection elle-même. C'est ainsi le cas de goupilles à cisailler ancrées par leurs extrémités, dans l'objet et le support respectivement, et disposées transversalement à la direction d'éjection. Cette technique à goupilles cisaillables présente toutefois les inconvénients suivants :
- elle nécessite un ajustement très précis entre les pièces en mouvement,
- il existe des risques de frottements parasites entre les pièces après rupture de la goupille,
- il existe une pièce supplémentaire, la goupille, dont les deux parties doivent être maintenues en place après rupture, et qui risquent en outre de racler la surface de l'autre pièce en regard,
- il est difficile de libérer l'objet, en pratique retenu par plusieurs goupilles, sans déséquilibrer le système (perturbations, en basculement notamment).

Cette solution est complexe car on est obligé de réaliser plusieurs pièces et de les monter dans un positionnement précis. Enfin, elle n'est pas toujours fiable.

L'invention vise à pallier les inconvénients précités.

Par ailleurs, la Demanderesse a pu constater que la rigidité de la liaison de l'objet à son support n'est pas toujours un avantage et qu'au contraire, pour permettre une éjection bien définie en amplitude et en orientation, il pouvait être avantageux de rendre cette liaison flexible quoique rigide en traction pour permettre ainsi de définir l'orientation de l'objet par rapport au support, avant et pendant l'éjection, grâce à la seule tige destinée à appliquer la poussée d'éjection.

L'invention a ainsi pour objet un dispositif d'assujettissement temporaire, simple et fiable, autorisant un débattement en flexion de l'objet par rapport à son support, et comportant une zone de liaison frangible à rupture calibrée en traction. Un tel dispositif doit ainsi assurer une liaison, souple en stockage, entre deux sous-ensembles, incorporant une zone à casser à énergie de rupture bien contrôlée et adaptée avantageusement à centrer au moins localement l'objet vis à vis de la direction d'éjection.

L'invention propose à cet effet un dispositif d'assujettissement temporaire d'un objet à un support comportant un corps destiné à être fixé au support et comportant une portion terminale annulaire fixée à l'objet et raccordée au corps par une portion de liaison, caractérisé en ce que cette portion de liaison ménagée entre la portion terminale annulaire du réceptacle fixée à l'objet et le corps est flexible et frangible, comportant une bague intermédiaire respectivement reliée à la zone terminale annulaire d'une part, et au corps d'autre part par deux paires de languettes axiales flexibles appariées selon d'es diamètres décalés angulairement de 90°, les languettes étant identiques dans chaque paire.

Grâce à son évidement axial central, ce dispositif permet le coulissement d'une éventuelle tige d'éjection. En variante, il peut également permettre le passage de conducteurs électriques (qui sont ainsi protégés) ou de tout autre tube ou câble de connection ou de transmission qu'il convient de préserver au mieux malgré le débattement relatif en flexion de l'objet par rapport à son support.

Selon des dispositions préférées de l'invention, éventuellement combinées :
- les languettes de l'une des paires ont des résistances à la traction égales, inférieures aux résistances à la traction égales des languettes de l'autre paire,
- les languettes reliant la bague intermédiaire à la zone terminale annulaire ont des résistances à la traction égales, inférieures aux résistances à la traction égales des languettes reliant la bague intermédiaire au corps du réceptacle,
- les languettes des deux paires ont des caractéristiques de flexion égales autour desdits diamètres selon lesquels ces languettes sont respectivement appariées,
- les languettes desdites deux paires ont une même épaisseur, mesurée transversalement aux dits diamètres et une même hauteur, mesurée parallèlement à la direction prédéterminée,
- les languettes de l'une des paires ont une même dimension radiale, inférieure à la dimension radiale commune des languettes de l'autre paire,
- la bague intermédiaire et les languettes font partie intégrante d'une partie au moins du corps et comportant ladite portion terminale annulaire,
- les languettes axiales flexibles ont des caractéristiques mécaniques identiques, une portion frangible étant prévue entre la zone terminale annulaire et la paire de languettes axiales flexibles reliant cette zone terminale annulaire à la bague intermédiaire, cette portion frangible comportant un triplet de languettes à casser identiques décalées angulairement de 120°.
- ledit corps est creux et contient une tige d'éjection comportant une portion arrière destinée à être soumise à une pression d'éjection et une extrêmité avant destinée à venir en appui contre l'objet,
- ce dispositif comporte un organe élastique comprimé axialement entre une collerette prévue à l'intérieur du corps et une portée prévue sur la portion arrière de la tige d'éjection mettant ainsi la portion de liaison frangible en précontrainte de traction ; cela évite notamment un desserrage de la fixation de la portion terminale annulaire à l'objet,
- la portion terminale annulaire du réceptacle comporte une portion filetée extérieurement coopérant avec un filetage interne ménagé à l'embouchure d'un logement de l'objet,
- ce dispositif comporte une portion de centrage adaptée à pénétrer avec faible jeu dans ledit logement.

Des objets, caractéristiques et avantages de l'invention ressortent de la description qui suit, donnée à titre d'exemple non limitatif, en regard des dessins annexés sur lesquels :
- la figure 1 est une vue partielle en perspective d'un dispositif conforme à l'invention,
- la figure 2 est une vue en coupe axiale d'un objet maintenu de façon temporaire par ce dispositif et qui est destiné à être éjecté par une tige d'éjection engagée dans ce dispositif,
- la figure 3 est une vue agrandie du détail III de la figure 2 représentant la portion frangible à rupture calibrée en traction du dispositif de la figure 1,
- les figures 4 et 5 en sont des vues en coupes transversales selon les lignes IV-IV et V-V de la figure 3,
- la figure 6 est une vue analogue à celle de la figure 3, présentant une variante de réalisation du centrage d'un objet fixé sur ce dispositif de la figure 1,
- la figure 7 est une vue partielle d'une variante de réalisation, sans souplesse, de la partie frangible de la portion de liaison, et
- la figure 8 en est une vue en coupe selon le plan de coupe VIII-VIII de la figure 7.

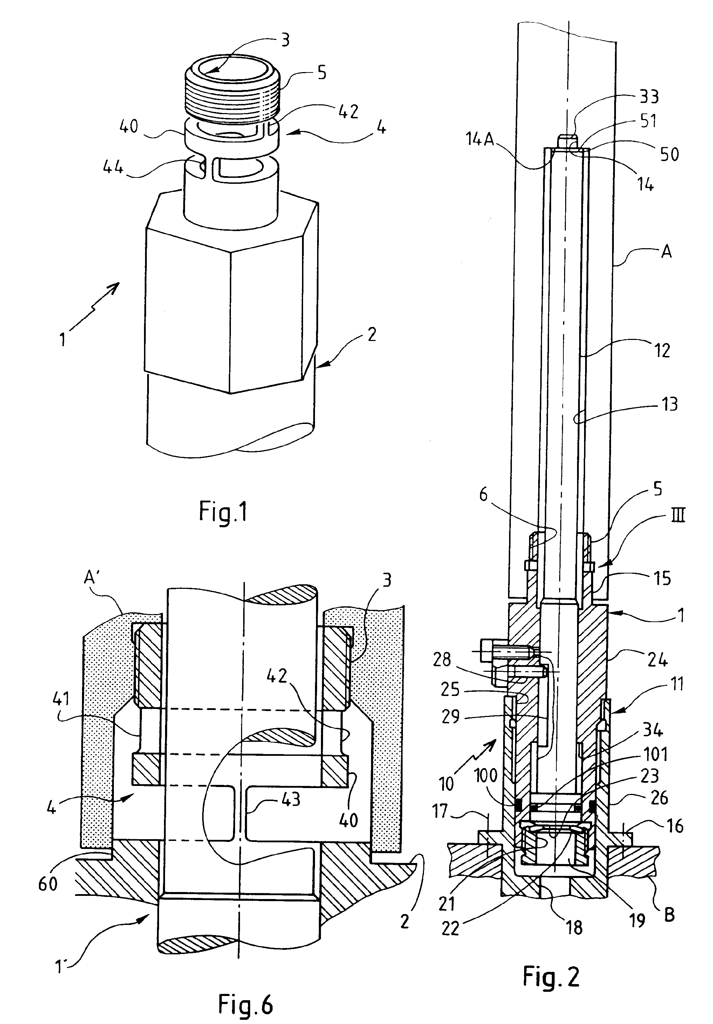

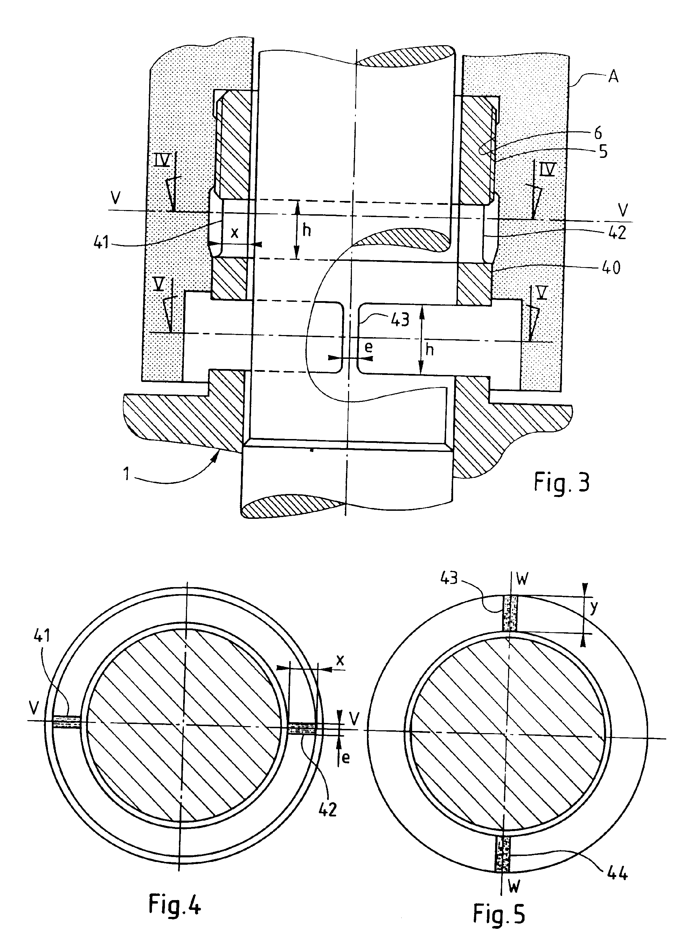

La figure 1 représente un dispositif d'assujettissement temporaire 1 comportant un corps 2 en pratique destiné à être fixé à un support, et une portion annulaire terminale 3 destinée à être fixée à un objet à larguer ou à éjecter (noté A aux figures 2 et 3) reliée à ce corps 2 par une portion de liaison flexible 4 à rupture calibrée en traction.

La portion terminale 3 présente en pratique un filetage extérieur 5 destiné à être vissé dans un filetage interne ménagé dans l'objet A, repéré 6 aux figures 2 et 3.

La portion flexible 4 sera détaillée plus loin à propos des figures 3 à 5.

Un exemple d'application du dispositif 1 est présenté à la figure 2, qui représente un mécanisme 10 destiné à assurer la triple fonction de maintien temporaire en une position précise, de séparation rapide et d'éjection contrôlée de l'objet A.

Ce mécanisme comporte principalement un réceptacle 11 de forme globalement cylindrique, une tige ou piston d'éjection 12, et un logement allongé 13 ménagé dans l'objet A au fond duquel sont prévues une zone centrale de centrage 14 et une portée transversale d'appui 14A, et près de l'embouchure duquel est prévu une zone terminale de centrage arrière 15.

Le réceptacle 11 est destiné à être fixé au support B, par tout moyen approprié, par exemple une collerette 16 (schématisée à la figure 2) munie d'alésages 17 adaptés au passage de boulons de fixation.

A la base de ce réceptacle est prévu un canal 18 communiquant avec une chambre de pression non représentée de tout type connu approprié munie en pratique d'un inflammateur de type pyrotechnique. Ce canal aboutit dans une chambre 19.

Ce réceptacle présente intérieurement, dans la chambre 19, une collerette en saillie interne 21 ici formée par une bague rapportée et contre laquelle un organe élastique 22, ici une rondelle BELLEVILLE (il peut aussi s'agir d'un ressort à spirale) vient axialement en appui. Celui-ci est par ailleurs en appui axialement contre une portée annulaire transversale 23 prévue à la base du piston.

Cette collerette interne 21 est ici rapportée à une chemise 24 pénétrant, en en étant solidaire par un filetage 25, dans un embout extérieur tubulaire 26 qui forme conjointement avec cette chemise le réceptacle 11.

Des joints d'étanchéité 100 et 101 sont prévus entre l'embout et la chemise, et entre la chemise et la base de la tige d'éjection.

Dans la paroi de cette chemise 24 pénètre radialement une goupille de sécurité non représentée destinée, lorsqu'elle est en place et se prolonge radialement jusque dans un alésage transversal (non représenté) de la tige 12, à empêcher tout mouvement intempestif de cette tige. Cette goupille doit bien sûr être écartée radialement, par tout moyen connu approprié, préalablement à l'éjection de l'objet A.

Au travers de la paroi de la chemise 24 pénètre en outre un ergot 28 de guidage en rotation pénétrant dans une rainure approximativement longitudinale 29, soit rectiligne soit hélicoïdale, ménagée dans le piston avec un angle d'inclinaison non nul par rapport à l'axe longitudinal X-X de la tige d'éjection. La dimension axiale de cette rainure est au moins égale à la course axiale de la tige d'éjection.

A sa partie supérieure, la chemise 24 se termine par la portion terminale annulaire 2 munie du filetage extérieur 5 destiné à coopérer avec le filetage intérieur 6 ménagé à la base du logement 13.

La portion flexible 4 est prévue entre cette portion filetée 5 et le reste de la chemise formant avec l'embout 26 le corps du réceptacle.

La tige d'éjection se termine par un ergot 33 pénétrant avec faible jeu dans la zone centrale de centrage 14.

La portion flexible 4 a pour objet d'assurer uniquement le maintien longitudinal de l'objet A par rapport à son support, la rigidité de la tige d'éjection 12 étant suffisante pour assurer le maintien de l'objet en cas d'efforts transverses.

Il est même préconisé que cette liaison frangible présente une faible résistance en flexion de manière à ne pas induire par réaction d'efforts transverses sur la tige d'éjection et de manière à ne pas avoir de composantes en traction ou compression sur les parties à casser.

C'est pourquoi cette portion de liaison frangible est avantageusement élastique en flexion, du type CARDAN avec deux axes transverses de rotation V-V et W-W décalés axialement et disposés à 90° l'un par rapport à l'autre.

Cette liaison est matérialisée par une bague intermédiaire 40 respectivement reliée à la zone filetée 30 liée à l'objet A, d'une part, et au reste du réceptacle lié au support B, d'autre part, par deux paires de languettes 41 et 42, 43 et 44 appariées selon des diamètres décalés axialement, et décalés angulairement de 90°. Ces languettes élastiques sont obtenues directement par usinage dans la chemise.

Ces languettes sont dimensionnées à partir du déplacement transversal maximal envisagé pour le centre de gravité de l'objet avant ou pendant l'éjection : leurs hauteurs h (parallèlement à l'axe X-X) et leurs épaisseurs e (perpendiculairement aux diamètres selon lesquels ils sont disposés) sont choisies compte tenue des caractéristiques mécaniques du matériau constitutif de ces languettes, en sorte que ces dernières absorbent ce déplacement sans rupture, de préférence sans déformation plastique.

Ces languettes des deux paires présentent avantageusement le même comportement en flexion (égalité des contraintes de flexion) pour des déplacements transversaux de l'extrémité libre de la tige qui sont égaux selon deux directions radiales perpendiculaires (en pratique selon les diamètres précités).

La mise en équation de cette condition est à la portée de l'homme du métier. Dans le cas où le décalage longitudinal entre les paires de languettes est faible devant la distance de celles-ci au centre de gravité de l'objet (ce que l'on suppose ici), la condition précitée se ramène à dire que les languettes ont toutes des caractéristiques de flexion égales, c'est-à-dire que le rapport e/h² a la même valeur pour chacune d'entre elles.

Dans l'exemple particulièrement simple représenté ici, ces languettes ont avantageusement la même hauteur h et la même épaisseur e.

Toutefois, de manière préférée, pour s'assurer que la rupture de la liaison frangible n'induise aucun moment parasite sur l'objet, on choisit de donner à l'une des paires de languettes, par exemple les languettes 41 et 42 les plus proches de la zone filetée, une dimension radiale x plus faible que celle, y, des languettes de l'autre paire : malgré l'identité de leurs caractéristiques en flexion on introduit ainsi une différence de résistance à la traction entre ces paires, provoquant ainsi la rupture sélective des languettes de l'une seulement de ces paires.

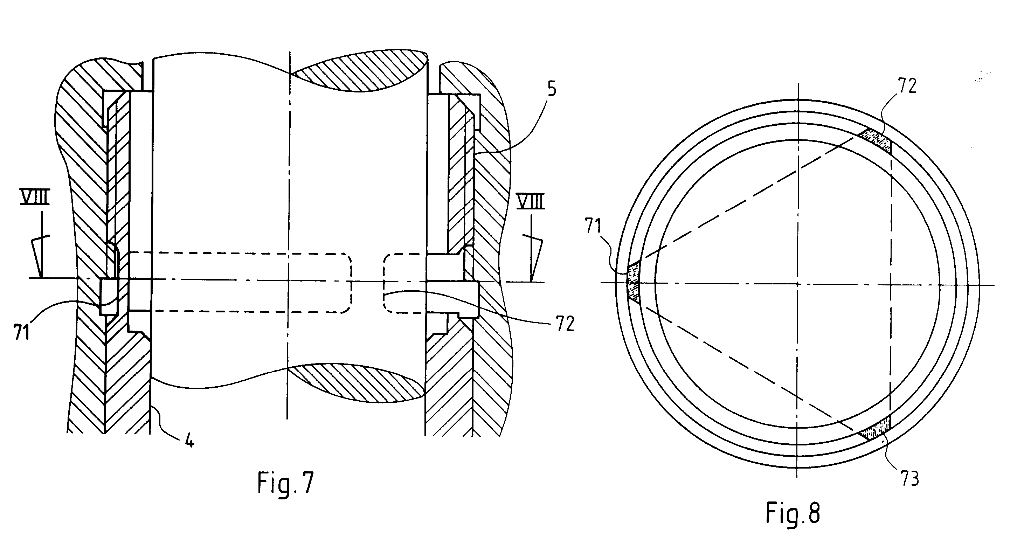

On notera que, en se référant par exemple à la figure 4, le moment d'inertie de la paire de languettes 41 et 42 est supérieur selon l'axe W-W au moment d'inertie de ces mêmes languettes selon l'axe V-V suivant lequel elles sont alignées. Ainsi, les sections résistantes des languettes étant décalées entre les figures 4 et 5, on obtient un dispositif de liaison dont une certaine souplesse peut être garantie approximativement constante en toutes directions.

Cette liaison frangible est ainsi à rupture calibrée en traction, entre le filetage 5 et la bague intermédiaire 40 qui assure ici le centrage terminal de l'objet A.

Afin que, préalablement à l'éjection, ces languettes ne travaillent qu'en flexion, que lors de l'éjection elles ne travaillent qu'en traction, et pour éviter que les filetages 5 et 6 se desserrent, ces languettes sont maintenues en précontrainte de tension grâce à l'organe élastique 22 qui tend à appliquer la tige d'éjection contre le fond du logement 13 en sollicitant par conséquent lesdites languettes.

Afin de s'affranchir des erreurs géométriques du centrage de l'objet par l'ergot 33 et de l'excentrement inévitable en pratique du centre de gravité G de l'objet par rapport à son axe géométrique X-X, il est apparu avantageux de prévoir autant que possible un rapprochement automatique du point d'application de la poussée au centre de gravité de l'objet.

C'est pour cela que, ainsi qu'il ressort de la figure 2, une rondelle 50 en matériau souple du type élastomère est avantageusement interposée axialement entre un épaulement 51 de la tige d'éjection auprès de son ergot 33 et l'épaulement 14A du logement de l'objet auprès de la zone centrale de centrage 14 ; cette rondelle souple maintient un contact réparti et assure ainsi la répartition de la poussée d'éjection sur le fond du logement au plus près du centre de gravité et ramène le barycentre des efforts infinitésimaux auprès du centre de gravité. Cette rondelle peut être une pièce rapportée indépendante, ou être obtenue par surmoulage.

En fait, on aura compris qu'en pratique l'effort de poussée est appliqué ici non pas par l'ergot lui-même mais par l'épaulement 51 qui le borde.

Le sous-ensemble "mécanisme d'éjection" est assemblé à l'aide d'un outillage ; on fait reculer le piston jusqu'à amener le ressort de mise en tension à spires jointives. L'objet est alors simplement vissé sur ce sous-ensemble jusqu'à la butée située en fond de filet, sans mise en précontrainte.

Après vérification de la position relative de l'objet par rapport à la chemise, on relâche le piston qui, par l'intermédiaire du ressort, met la liaison en précontrainte, ce qui assure en même temps l'immobilisation en rotation.

Pour effectuer ce montage on peut venir visser, soit l'objet sur le mécanisme d'éjection, soit le mécanisme d'éjection sur l'objet.

La mise en oeuvre du mécanisme de l'invention peut se décrire ainsi :

La mise en oeuvre de l'éjection est commandée, par exemple, par la mise à feu d'un l'inflammateur. Celui-ci, en mettant en pression la chambre de combustion, permet au piston de venir pousser sur l'objet au niveau de l'appui haut situé dans la zone du centre de gravité.

Dans un premier temps, il y a rupture en traction des deux pattes supérieures de la liaison à casser de type cardan et, dans un deuxième temps, l'objet est mis en vitesse.

Dès le début du mouvement, l'objet quitte son centrage bas en 40 de façon à ce que le seul interface soit un appui et un centrage au niveau de son centre de gravité.

Il est à noter qu'après rupture de la liaison à casser, sa partie supérieure correspondant à la zone filetée reste solidaire de l'objet (cette masse est faible en pratique).

Pendant le mouvement de translation du piston, le doigt 28 fixé sur la chemise glisse dans la rainure hélicoïdale ou rectiligne 29 pratiquée dans celui-ci qui provoque sa mise en rotation. Cette mise en rotation de l'objet éjecté est obtenue par frottement au niveau de l'interface piston/objet.

Une butée de fin de course 34 assure l'arrêt du piston éjecteur. L'objet se dégage alors de son interface et se retrouve en phase balistique.

Il est à noter que le jeu objet/piston est tel que le dégagement complet de l'objet par rapport au piston se fasse sans contact.

La figure 6 présente une variante de réalisation de l'objet, ici noté A', dans laquelle le centrage de ce dernier n'est plus assuré par la rondelle intermédiaire 40 mais par une couronne 60 prévue entre la zone flexible 4 et le corps 2.

En variante, non représentée, sous réserve de n'avoir besoin d'aucun centrage, on peut supprimer cette couronne 60.

Les figures 7 et 8 présentent, de façon partielle, une autre variante de réalisation de la portion de liaison frangible : selon cette variante les fonctions de flexibilité et de frangibilité sont découplées.

Pour cela, on modifie la portion 4 décrite aux figures 3 à 5 en donnant aux languettes 41 et 44 des caractéristiques mécaniques identiques, tandis que l'on prévoît entre cette portion de liaison flexible et la portion terminale annulaire 5, une portion frangible 70 représentée isolément sur les figures 7 et 8 précitées.

Cette portion frangible 70 comporte un triplet de languettes à casser identiques 71, 72 et 73, obtenues en pratique par usinage décalées angulairement les unes par rapport aux autres de 120°, reliant la zone terminale annulaire 5 à la portion flexible 4.

De manière préférée, ces languettes ont des sections trapézoïdales, avec des côtés qui sont coplanaires avec des côtés des autres languettes respectivement, ainsi que cela est figuré par le triangle (sans sommet) représenté en traits mixtes.

Il va de soi que la description qui précède n'a été proposée qu'à titre d'exemple non limitatif et que de nombreuses variantes peuvent être proposées par l'homme de l'art sans sortir du cadre de l'invention.

## Revendications

1. Dispositif d'assujettissement temporaire d'un objet (A, A') à un support (B) comportant un corps (2) destiné à être fixé au support et comportant une portion terminale annulaire (3) fixée à l'objet et raccordée au corps par une portion de liaison (4), caractérisé en ce que cette portion de liaison (4) ménagée entre la portion terminale annulaire (3) du réceptacle fixée à l'objet et le corps est flexible et frangible, comportant une bague intermédiaire (40) respectivement reliée à la zone terminale annulaire d'une part, et au corps d'autre part par deux paires de languettes axiales flexibles (41, 42, 43, 44) appariées selon des diamètres décalés angulairement de 90°, les languettes étant identiques dans chaque paire.

2. Dispositif selon la revendication 1, caractérisé en ce que les languettes (41, 42) de l'une des paires ont des résistances à la traction égales, inférieures aux résistances à la traction égales des languettes (43, 44) de l'autre paire.

3. Dispositif selon la revendication 2, caractérisé en ce que les languettes (41, 42) reliant la bague intermédiaire à la zone terminale annulaire ont des résistances à la traction égales, inférieures aux résistances à la traction égales des languettes reliant la bague intermédiaire au corps du réceptacle.

4. Dispositif selon la revendication l'une quelconque des revendications 1 à 3, caractérisé en ce que les languettes des deux paires ont des caractéristiques de flexion égales autour desdits diamètres selon lesquels ces languettes sont respectivement appariées.

5. Dispositif selon l'une quelconque des revendications 1 à 4, caractérisé en ce que les languettes desdites deux paires ont une même épaisseur, mesurée transversalement auxdits diamètres et une même hauteur, mesurée parallèlement à la direction prédéterminée.

6. Dispositif selon la revendication 5, caractérisé en ce que les languettes (41, 42) de l'une des paires ont une même dimension radiale, inférieure à la dimension radiale commune des languettes (43, 44) de l'autre paire.

7. Dispositif selon l'une quelconque des revendications 1 à 6, caractérisé en ce que la bague intermédiaire (40) et les languettes font partie intégrante d'une chemise globalement cylindrique (24) formant une partie du corps et comportant ladite portion terminale annulaire (3).

8. Dispositif selon la revendication 1, caractérisé en ce que les languettes axiales flexibles ont des caractéristiques mécaniques identiques, une portion frangible (70) étant prévue entre la zone terminale annulaire (5) et la paire de languettes axiales flexibles reliant cette zone terminale annulaire à la bague intermédiaire, cette portion frangible comportant un triplet de languettes à casser identiques (71, 72, 73) décalées angulairement de 120°.

9. Dispositif selon l'une quelconque des revendications 1 à 6, caractérisé en ce que ledit corps est creux et contient une tige d'éjection (12) comportant une portion arrière destinée à être soumise à une pression d'éjection et une extrémité avant (33) destinée à venir en appui contre l'objet.

10. Dispositif selon la revendication 9, caractérisé en ce qu'il comporte un organe élastique (22) comprimé axialement entre une collerette (21) prévue à l'intérieur du corps et une portée prévue sur la portion arrière de la tige d'éjection, mettant ainsi la portion de liaison frangible (4) en précontrainte de traction.

11. Dispositif selon l'une quelconque des revendications 1 à 10, caractérisé en ce que la portion terminale annulaire (3) du réceptacle comporte une portion filetée extérieurement (5) coopérant avec un filetage interne (6) ménagé à l'embouchure d'un logement (13) de l'objet.

12. Dispositif selon la revendication 11, caractérisé en ce qu'il comporte une portion de centrage (40, 60) adaptée à pénétrer avec faible jeu dans ledit logement.

## Patentansprüche

1. Vorrichtung zur zeitlichen Halterung eines Objektes (A, A') an einem Träger (B), mit einem Körper (2) zur Befestigung am Träger und mit einem ringförmigen Endabschnitt (3), der am Objekt befestigt und über einen Verbindungsabschnitt (4) an den Körper angeschlossen ist, **dadurch gekennzeichnet,** daß dieser Verbindungsabschnitt (4), der zwischen dem ringförmigen, am Objekt befestigten Endabschnitt (3) des Aufnahmeteils und dem Körper angeordnet ist, flexibel und zerbrechlich ist und einen Zwischenring (40) aufweist, der über zwei Paare flexibler, axial verlaufender Stege (41, 42, 43, 44) zum einen mit der ringförmigen Endzone sowie zum anderen mit dem Körper verbunden ist, wobei die Stege paarweise längs um einen Winkel von 90° zueinander versetzter Durchmesser angeordnet sowie in jedem Paar identisch ausgebildet sind.

2. Vorrichtung nach Anspruch 1, dadurch gekennzeichnet, daß die Stege (41, 42) des einen der Paare untereinander gleiche Zugfestigkeiten aufweisen, die geringer als die untereinander gleichen Zugfestigkeiten der Stege (43, 44) des anderen Paares sind.

3. Vorrichtung nach Anspruch 2, dadurch gekennzeichnet, daß die Stege (41, 42), die den Zwischenring mit der ringförmigen Endzone verbinden, untereinander gleiche Zugfestigkeiten aufweisen, die geringer als die untereinander gleichen Zugfestigkeiten der Stege sind, die den Zwischenring mit dem Körper des Aufnahmeteils verbinden.

4. Vorrichtung nach einem der Ansprüche 1 bis 3, dadurch gekennzeichnet, daß die Stege der zwei Paare um die besagten Durchmesser herum, längs denen diese Stege jeweils paarweise angeordnet sind, gleiche Biegeeigenschaften aufweisen.

5. Vorrichtung nach einem der Ansprüche 1 bis 4, dadurch gekennzeichnet, daß die Stege der zwei Paare eine gleiche, quer zu den Durchmessern gemessene Dicke und eine gleiche, parallel zur vorgegebenen Richtung gemessene Höhe aufweisen.

6. Vorrichtung nach Anspruch 5, dadurch gekennzeichnet, daß die Stege (41, 42) eines Paares eine gleiche radiale Abmessung aufweisen, die geringer als die gemeinsame radiale Abmessung der Stege (43, 44) des anderen Paares ist.

7. Vorrichtung nach einem der Ansprüche 1 bis 6, dadurch gekennzeichnet, daß der Zwischenring (40) und die Stege Bestandteil eines allgemein zylindrischen Mantels (24) sind, der einen Teil des Körpers bildet und den besagten ringförmigen Endabschnitt (3) aufweist.

8. Vorrichtung nach Anspruch 1, dadurch gekennzeichnet, daß die flexiblen axialen Stege identische mechanische Eigenschaften aufweisen, wobei ein zerbrechlicher Bereich (70) zwischen der ringförmigen Endzone (5) und dem Paar flexibler axialer Stege, welche die ringförmige Endzone mit dem Zwischenring verbinden, vorgesehen ist und drei identische Sollbruchstege (71, 72, 73) aufweist, die um einen Winkel von 120° zueinander versetzt sind.

9. Vorrichtung nach einem der Ansprüche 1 bis 6, dadurch gekennzeichnet, daß der Körper hohl ist und einen Ausstoßstab (12) mit einem hinteren Abschnitt, der dazu bestimmt ist, einem Ausstoßdruck ausgesetzt zu werden, und mit einem vorderen Ende (33) zur Anlage an das Objekt enthält.

10. Vorrichtung nach Anspruch 9, dadurch gekennzeichnet, daß sie ein elastisches Organ (22) aufweist, das axial zwischen einem im Inneren des Körpers vorgesehenen Kragen (21) und einer am hinteren Abschnitt des Ausstoßstabs vorgesehenen Lagerfläche zusammengedrückt wird und so den zerbrechlichen Verbindungsabschnitt (4) auf Zug vorspannt.

11. Vorrichtung nach einem der Ansprüche 1 bis 10, dadurch gekennzeichnet, daß der ringförmige Endabschnitt (3) des Aufnahmeteils einen mit Außengewinde versehenen Abschnitt (5) aufweist, der mit einem Innengewinde (6) zusammenwirkt, das an der Mündung einer Ausnehmung (13) des Objektes angeordnet ist.

12. Vorrichtung nach Anspruch 11, dadurch gekennzeichnet, daß sie einen Zentrierabschnitt (40, 60) aufweist, der dazu eingerichtet ist, mit geringem Spiel in besagte Ausnehmung einzudringen.

## Claims

1. Device for temporarily attaching an object (A, A') to a support (B) comprising a body (2) adapted to be fixed to the support and having an annular end portion (3) fixed to the object and connected to the body by a joining portion (4), characterised in that this joining portion (4) provided between the annular end portion (3) of the receptacle fixed to the object and the body is flexible and frangible, comprising an intermediate ring (40) respectively connected firstly to the annular end area and secondly to the body by two pairs of flexible axial tangs (41, 42, 43, 44) matched on diameters at 90° to each other, the tangs in each pair being identical.

2. Device according to Claim 1, characterised in that the tangs (41,42) in one of the pairs have the same tensile strength, less than the equal tensile strengths of the tangs (43, 44) in the other pair.

3. Device according to Claim 2, characterised in that the tangs (41, 42) connecting the intermediate ring to the annular end area have the same tensile strength, less than the equal tensile strengths of the tangs connecting the intermediate ring to the receptacle body.

4. Device according to any one of Claims 1 to 3, characterised in that the tangs in both pairs have the same bending characteristics about the said diameters on which these tangs are respectively matched.

5. Device according to any one of Claims 1 to 4, characterised in that the tangs in the said two pairs have the same thickness measured transversely to the said diameters and the same height measured parallel to the predetermined direction.

6. Device according to Claim 5, characterised in that the tangs (41, 42) in one of the pairs have the same radial dimension, less than the common radial dimension of the tangs (43, 44) in the other pair.

7. Device according to any one of Claims 1 to 6, characterised in that the intermediate ring (40) and the tangs form an integral part of a generally cylindrical casing (24) forming part of the body and including the said annular end portion (3).

8. Device according to Claim 1, characterised in that the flexible axial tangs have identical mechanical characteristics, a frangible portion (70) being provided between the annular end area (5) and the pair of flexible axial tangs connecting this annular end area to the intermediate ring, this frangible portion having three identical frangible tangs (71, 72, 73) at 120° to each other.

9. Device according to any one of Claims 1 to 6, characterised in that the said body is hollow and contains an ejector rod (12) having a rear portion intended to be subjected to an ejection pressure and a front end (33) intended to come to bear against the object.

10. Device according to Claim 9, characterised in that it includes an elastic member (22) compressed axially between a collar (21) provided inside the body and a bearing surface provided on the rear portion of the ejector rod, thus prestressing the frangible joining portion (4) in traction.

11. Device according to any one of Claims 1 to 10, characterised in that the annular end portion (3) of the receptacle has an externally threaded portion (5) cooperating with an internal thread (6) formed at the mouth of a recess (13) in the object.

12. Device according to Claim 11, characterised in that it has a centring portion (40, 60) adapted to enter the said recess with slight clearance.
